# EUROPEAN PATENT APPLICATION

(11) **EP 4 660 432 A1**
(43) Date of publication of application: **10.12.2025**
(21) Application number: 25179717.1
(22) Date of filing: 29.05.2025
(51) Int. Cl.: F02C 3/08, F01D 1/28, F02C 3/14, F02C 7/08, F02C 7/143, F02K 3/072

(54) **IMPROVED COUNTER-ROTATING TURBOFAN**

(30) Priority: 05.06.2024 IT 202400012781
(71) Applicant: Mariotti, Gabriele, 44121 Ferrara (IT)
(72) Inventor: Mariotti, Gabriele, 44121 Ferrara (IT)
(74) Representative: Bruni, Giovanni

(57) **Abstract**

The present invention is relevant to a high efficiency turbofan propulsion with high by-pass ratio for aeronautical applications. In particular, to a turbofan with the propulsor made with a counterrotating centrifugal radial turbine fluidically connected to a gas generator, of the "reverse flow" type, with an inter-cooled regenerative cycle.

Preferably, the present invention applies to small and medium-sized turbofans, for example with thrust lower than 10,000 lbf.

## Description

### State of the Art

The ''turbofan'' is a propulsion system based on a gas turbine, often referred to as "gas generator", which drives a ducted fan that accelerates an air flow generating the propulsive action together with the burned gases.

A turbofan typically comprises a fan section, or propulsor, including one or more impellers with relative de-swirl vanes and a gas generator with a compressor section, a combustor section and a turbine section. The use of a fan composed by multiple stages allows to optimize the aerodynamic efficiency of the stages or to reach thrust conditions sufficient for supersonic flight without the use of an afterburner, this condition is often indicated as ''supercruise''.

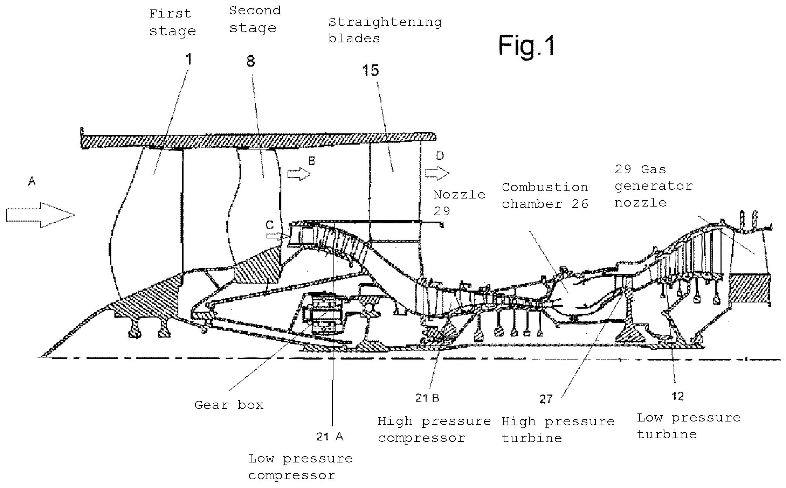

The Figure 1 shows a typical cross-section of a high by-pass counter-rotating turbofan. Air enters the turbofan at section A and splits into two flows B and C. The Flow B, often referred as ''cold stream", is compressed by two axial impellers 1 and 8, then expanded into an array of de-swirl vanes 15, sometimes called outlet guide vanes ("OGV"), increasing the exit velocity of the air at section D to generate thrust. The Flow C, often referred as "hot stream", is firstly compressed by the fan impellers and conveyed into a compressor 21 followed by a combustion chamber 26 where the air is mixed with fuel and ignited to generate a high-energy combustion gas flow. The gas flow expands firstly through the high pressure axial turbine section 27 which drives the high pressure compressor and then in a low pressure axial turbine section 12 which drives, via a gearbox, the fan impellers. The flow downstream of the low pressure turbine expands into a nozzle 29 with discharge temperatures in the range of 500 - 600°C.

Turbofan engines are generally characterized by a parameter called ''by-pass ratio", that is the flow ratio between the cold stream and the stream elaborated by the gas generator. In modern turbofans there is a tendency to adopt high by-pass ratios, for example greater than 6, to obtain low specific consumption. Considering that the volumetric flow rate of a turbomachinery is proportional to the square of the diameter of the rotating parts, a turbofan with an high by-pass ratio is characterized by a fan 1 of much larger dimensions than the compressor 4 of the gas generator. This characteristics also entails the need to have a different rotational speed between the fan and the gas generator since the rotation speed of a turbomachinery is essentially inversely proportional to its diameter.

The turbofan configuration as shown in Fig. 1, also called twin shaft or "twin spool", allows the fan to operate at a lower speed than the compressor having the axial turbine sections on separate shafts. Typically for a large fan operating at 4000 rotations per minute (indicated by the acronym "RPM") driven by the low pressure turbine mechanically connected on the same shaft, the corresponding gas generator operates at a rotation speed higher than 12000 RPM, with a speed ratio of about 4. In turn, the size of the low pressure turbine is much larger than the high pressure turbine even though it processes the same flow rate of combustion gases.

An excessive difference in speed, and therefore diameter, between the low pressure turbine and the high pressure turbine has negative effects on the weight of the engine, its fluid dynamics and in general on propulsive efficiency.

To overcome this problem, for example when the by-pass ratio is higher than 10, a reduction gear is introduced between the gas generator and the fan as it is shown in the patents EP 3 730 768 A1 and US20210017911A1 from Rolls-Royce. This solution has obvious disadvantages in terms of weight, cost and reliability which limits its use to medium-large size engines.

An alternative solution, which does not currently find practical application in the public domain, is shown in the patent US2014/054733 from United Technologies Corporation (Pratt and Whitney) relating to a counter-rotating regenerative cycle turbofan. In this patent the low-pressure axial turbine directly drives the fan with the turbine blades connected to a ring mechanically supported by the fan blades. This solution has the disadvantage of significantly increasing the frontal section of the engine, which is not limited by the diameter of the fan but it extends radially to include the axial turbines and the related ducts arranged outboard to the fan. Furthermore, the solution has obvious limitations with regard to the mechanical and fluid dynamic design of the engine blades. In fact, the fan blades are subject to the centrifugal force of the components connected to them, in this case the turbine blades and the related supports.

This force adds to the centrifugal force generated by the mass of the fan blade, limiting its peripheral speed with negative effects on the performance of the fan impellers. It should also be noted that the blades of these turbines must not only be subject to the constraint of the same rotation speed of the fan, a constraint which is also present in turbofans without a gearbox, but also to a geometric constraint on the minimum diameter of the blades which generally negatively influences the aspect ratio of the turbine blades profile and therefore the fluid dynamics.

With reference to the limitations described above, the need for systems and methods to develop high by-pass ratio turbofans with a simple architecture and high efficiency is highlighted. It is known that a simple mechanical architecture, i.e. with a minimum number of components, can lead to savings in weight, cost and greater reliability.

### Summary of the Invention

The subject of the present invention is a counter-rotating turbofan with an architecture that allows to realize an high by-pass ratio, for example greater than 12, without the use of a gearbox and with the turbine stages having diameters generally smaller than those of the propulsor impellers, thus solving the aforementioned limitations of the prior art. The invention also aims to increase the thermodynamic efficiency of the turbofan by means of an inter-cooled, regenerative cycle and regulating devices mounted without compromising either the frontal section or the aspects of simplicity and lightness that an aircraft engine must have.

The present invention includes a gas generator with the turbine exhaust directed perpendicularly to the rotation axis and fluidically connected to a counter-rotating multi-stage centrifugal radial turbine which directly drives, via a shaft, the two impellers of the fan with an interposed array of movable blades. The movable blades, appropriately rotated via an actuation system, modify the power of the engine and the consumption as a function of the thrust requirements and the external temperature, which means as function of the peripheral Mach number of the fan blades.

The use of an array of variable camber stator blades downstream of the first impeller allows for a better recovery of static pressure, a variation in the split of power between the two impellers of the fan for efficiency optimization and an improvement in the surge margin, corresponding to the ability to reach high altitudes without using complicated and cumbersome systems for varying the angle of the rotor blades. In fact the design of this latter system is strongly influenced by the high centrifugal stresses induced by blades rotation and by inlet guide vanes fluid-dynamic losses.

The use of a radial turbine, rather than the axial type commonly used in the known art, allows to overcome the problem of the sudden increase in the height of the gas channel present when there are two rows of turbine axial blades that process the same flow with very different rotation speeds. From simple geometric considerations it can be demonstrated that, with the same average peripheral speed of the blades, the radial turbine has a smaller radial footprint of the gas channel, i.e. the channel that delimits the flow entering and exiting the blades, compared to the channel associated with an axial turbine of equal volumetric flow.

The use of the counter-rotating radial turbine makes it possible to efficiently couple a''fast'' gas generator, for example with a speed of 100,000 rotations per minute, with a"slow" fan, for example 14,000 rotations per minute, corresponding to a speed reduction ratio of approximately 7 without interposing a complex gear system and without adding rotating masses to the ends of the fan blades which can thus reach optimal peripheral speeds, for example 400 m/s, without introducing excessive stresses in the blades and their supports.

The counter-rotating centrifugal radial turbine consists of two sets of blades, suitably shaped, rotating in opposite directions with respect to a common axis. The blades are supported by rings mechanically connected to the end of the airfoil profile and these in turn joined by disks connected to the same shaft that supports each fan impeller. In the counter-rotating turbine the power generation occurs without the use of stationary blades, therefore for the same enthalpy drop and rotation speed, it is possible to realize reduced radial dimensions compared to a mono-directional centrifugal radial turbine that requires stator stages.

Advantageously, the use of the counter-rotating fan is produces an almost axial flow at the exit of the second impeller, this characteristics allows to use stator blades with regenerating heat exchangers that are characterized by straight faces parallel to the rotation axis, for example prismatic, of simpler construction than an exchanger shaped according to a curved vane profile that would be necessary to straighten a strongly tangential flow such as that coming from non-counter-rotating impellers.

The regenerators transfer an appreciable amount of heat from the combustion gases to the flow of compressed air coming from the last impeller of the gas generator compressor before it enters the combustion chamber.

Advantageously, the last impeller of the compressor is mounted antipodal to the turbine exhaust in order to obtain a countercurrent heat exchange and maximize the length of the heat exchanger-regenerators, the latter being arranged circumferentially to the gas generator and constrained in length by the distance between such impeller and the turbine exhaust.

Advantageously, the annular fan flow channel has a radial extension large enough to install, without protruding on it, an heat exchanger which, fed by low-profile dynamic air intakes, allow an inter-cooled compression in the compressor without obstructing the cold flow channel.

Thanks to the present invention, it is possible to have an improvement of 15-30% in specific consumption with limited weight increase compared to a solution according to the known art.

Features and embodiments are described hereafter and further defined in the claims which form an integral part of this description. The above brief description identifies features of the various embodiments of the present invention so that the following detailed description may be better understood. The various embodiments of the invention are not limited in their application to the construction details and arrangements of components described in the following description or illustrated in the drawings. The invention may be realized in other embodiments and may be produced in various ways.

### Brief Description of the Figures

Further features and advantages of the invention will become more evident from the detailed description of preferred, but not exclusive, embodiments of an improved counter-rotating turbofan, illustrated by way of example and not limitation, with the aid of the attached figure, in which:
Fig. 1 shows cross section of a two-stage counter-rotating turbofan with a high by-pass ratio according to the prior art, for example according to the patent US7,603,844 of General Electric
Fig. 2 shows a simplified cross section of a Turbofan with counter-rotating blades according to an embodiment of the patent described in this document. In this drawing are shows the geometric details of components derived from different views and section planes of the assembly.
Fig. 3 shows a section perpendicular to what is shown in Fig. 2 with the detail of the transition zone between the turbine exhaust and the exchangers-regenerators.
Fig. 4 shows the typical configuration of a centrifugal radial turbine stage

The same numbers and the same reference letters in the figures identify the same elements or components.

### Detailed Description of a Preferred Embodiment of the Invention

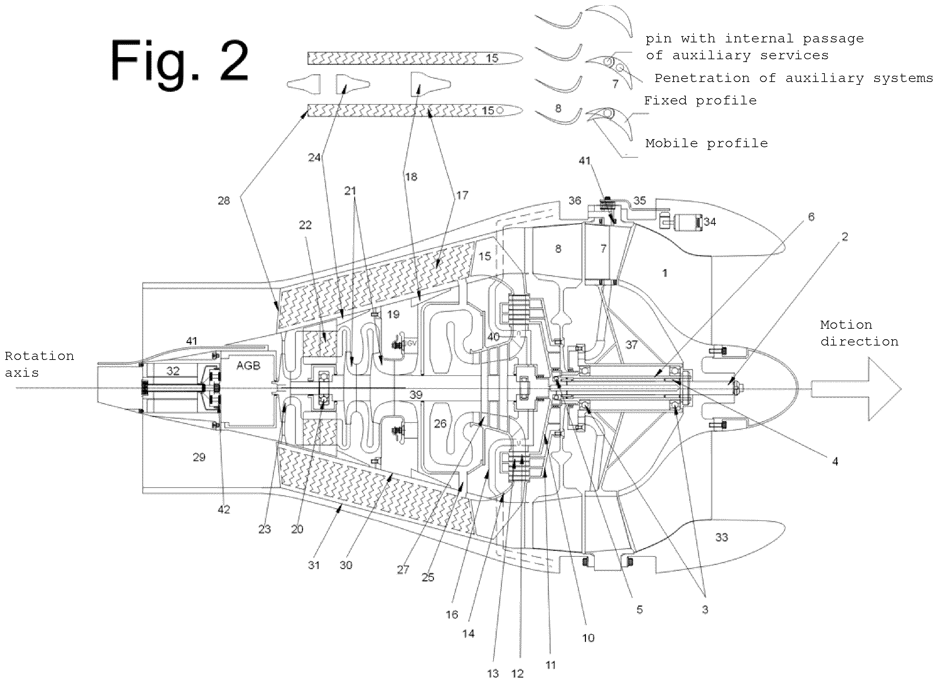

Figure 2 shows a configuration corresponding to the essential components of a turbofan according to the present invention.

There is a first centrifugal impeller 1, of mixed-flow type, followed by a series of stator blades 7 having both a structural function and for flow turning towards a second axial type impeller 8. The impellers 1 and 8 have a plurality of blades, for example between 16 and 23, with three-dimensional shape and can be made of aluminum alloy or composite material with carbon fibers and titanium. The blades 7 are of the variable geometry type and can modify the camber angle rotating a portion of the profile containing the trailing edge by means of an actuator 34 that moves a ring connected to levers 35 using a spherical joint 41.

The fixed part of the blade profile 7, having both an aerodynamic and structural function, is mechanically connected to the ring 36 which acts as a frame connected to the engine casing via a flange. The variation of angle, for example up to a maximum of 30°, of the blade portion containing the trailing edge allows to vary the power distribution between the two fans and therefore varying their speed. A deviation of the flow in the direction of the tangential speed of the impeller 8, i.e. a pre-rotation, allows to reduce its Eulerian work therefore producing an increase in speed, it also increases the stall margin and therefore the operational flexibility. The increased rotation speed of the impeller 8 influences the pressures in all the stages of the radial turbine causing a reduction in speed of the impeller 1, this has beneficial effects on the impeller relative Mach and on the efficiency. A reduction in relative Mach has beneficial effects during operation at high altitudes, where due to the reduced temperature, the speed of sound is reduced, promoting supersonic shock losses if the first stage blades when they maintain an high rotational speed. The angular position of the movable blades is adjusted by a control system that moves the actuator based on the data from sensors installed on the engine or on the aircraft, as well as from engine data, for example the performance map of the fan and the turbines. The profiles of the stator blades 7 incorporate passages for the engine auxiliary systems, for example fluids such as oil and fuel, and electrical cables.

The impeller 1 is connected with a removable mechanical fit to the shaft 2 which is mounted rotoidally and coaxially to the shaft 6 on two roller bearings 4, for example of needle type. The shaft 6 on which the impeller 8 is connected with a removable mechanical assembly is supported rotoidally by two roller bearings 3, for example 3-point ball bearings at the front with thrust bearing function and cylindrical rollers on the turbine side, or oblique, as in the figure, to be able to support radial and axial loads coming from the two shafts 2 and 6.

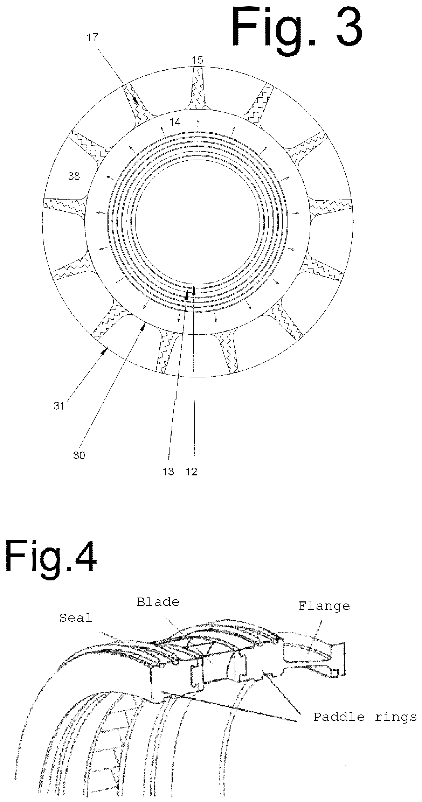

Both shafts are connected axially with shims and an axial bearing 5 which supports the mutual axial forces of the two shafts. These are mechanically connected to two discs 10 and 11 which support the turbine stages 12 and 13 with three stages per disc cantilevered from the bearings and realized in a configuration similar to that shown in Fig.4 with the blade support rings connected to the turbine disc, 10 or 11, via a flange.

The bearings 3, 4, 5 of the shafts 2 and 4 are isolated from the external environment with one or more chambers, not entirely shown in the figure, buffered with air bled from the gas generator according to a known technique and conveyed through special channels passing through the vanes 7. The bearings and the shafts are supported on a frame integrated with the support of the adjustable vanes where the same blades 7 connect the conical supports 37 to the flange 36 where the attachment points, not shown, of the engine to the aircraft structure are made according to a known technique.

The air from the impeller 1 passes through the array of blades 7 where the static pressure increases and flow is directed appropriately, for example with a total pressure of 1.2 Bar, to the impeller 8 which further increases the total pressure, for example to 1.4 Bar. The air flow leaves the impeller 8 in an almost axial direction, i.e. with a reduced tangential component, and enters an annular section 38 delimited by the blades 15 and the walls 30 and 31 where it is heated by the heat released by the surfaces of the blades 15 up to the trailing edge of the blades 28 and accelerated up to the exit of the nozzle 29 at a speed of approximately 250 m/s. The walls of the blades 15 in contact with the fan flow in the passage section 38 are made of a material having good thermal conductivity, for example aluminium, so as to simultaneously cool it and energise, or increase the temperature, the compressed air of the fan flow, increasing its thrust capacity once fully expanded in the nozzle 29. The nozzle 29 may optionally incorporate a cone 41 or a movable mechanism to vary the flow section, according to a known technique, if the engine is used in supersonic applications with the two stages of the fan having a high compression ratio, for example greater than 1.8.

The blades 15, that are in a number between 8 and 15, are profiled to receive the compressed air from the impeller 8 with a small tangential speed, this allows to have blade walls with a predominantly rectilinear development and considerable length, for example comparable to that of the gas generator, or corresponding to the axial distance between the radial turbine and the last impeller of the compressor. The length of the blade allows to accomodate inside them the exchangers-regenerators 17 of great length, and therefore surface, with low hydraulic losses. In this way the heat exchange surface of the blades 15 is maximized with obvious thermodynamic and structural benefits.

The blades 15 include, near the leading edge, pipes or cables for auxiliary services of the engine. The exchangers 17, being mounted in straight prismatic blades, can be made in a simple and economical way using 3D printing techniques or, preferably, using plates machined and joined by brazing, to form panels where the fluids are crossing in counterflow configuration, or with "diffusion bonding" techniques. The blades 15, and possibly the exchangers 17, help to strengthen the structure of the engine.

The assembly formed by the blades 15, the walls 30 - 31 and everything connected to them is mechanically and fluidically connected to the ring 36, which supports the blades 7, via a bolted flange.

Inside the duct 38, a portion of the compressed air from the fan is extracted, for example 10% by mass at 1.4 Bar, and conveyed through appropriate openings 18, for example using submerged dynamic "NACA" intakes, to a plenum 19 which feeds the impellers of the centrifugal compressor 21 through an array of variable inlet guide vanes "IGV", actuated and controlled according to a known technique. The delivery of the second stage of the compressor is mechanically and fluidically connected to a heat exchanger 22 which cools the flow of compressed air from the first two stages of the gas generator compressor with colder air taken from the fan flow through appropriate openings 24, for example submerged dynamic intakes which similarly re-introduce it into the duct 38 once air has heated up in the exchanger.

The cooling airflow is ensured by the dynamic pressure difference in the air intakes 24 or by special ducts, not visible in the figure, connected to areas having lower pressure than that present in the duct 38. The exchanger 22 is made in a single piece by 3D printing or by brazed sectors in aluminum or titanium to form an annular structure contained within the surface 30 delimiting the inner surface of the flow channel coming from the fan. The air cooled in the exchanger 22 feeds the third stage of the gas generator compressor having an impeller 23 mounted overhung to the bearings 20 of the rotor 39 and with the suction oriented opposite to the direction of thrust of the engine. The cooling between the second and third stages of the compressor reduces the gas head, and therefore the power, necessary to reach the final delivery pressure of the compressor, for example between 8 and 15 Bar, thus improving the fuel consumption. The impellers are mechanically connected to the shaft by means of mechanical couplings, for example a Hirth joint with central tie rod.

The bearings 20 are mounted inside sumps that are in communication via the channels 16, not completely visible in the drawing, with the part of the engine external to the case 31 where the auxiliary piping systems are present, partially shown in the figure, for lubrication and for air pressurizing the cavities of the engine. Some of the channels 16 penetrates through suitable passages inside the blades 15, without obstructing the flow of the fan in section 38, and through the profiles of the stator vanes 40 of the gas generator turbine which include the first nozzle of the radial turbine.

The compressor impeller diffuser 23 is mechanically and fluidically connected via a transition element, conceptually similar to that shown in Fig.3, which connects a cylindrical surface with a plurality of openings fluidically connected to the blades 15 containing the regenerator heat exchangers 17.

The compressed air from the compressor is routed inside the profile of the de-swirl blades 15 and passes through the regenerator 17 in counterflow with the high-temperature combustion gases and, once heated, feeds the combustion chamber 26 via the supply channels 25. The combustion chamber 26 is of the radial type with a fuel distributor, for example kerosene or hydrogen, of the rotating ring type mechanically connected to the shaft according to a known technique not shown in the figure.

The fuel-air mixture is ignited at start-up by means of an ignition device, not shown, which passes through the blades 15 near the leading edge, therefore without interfering with the fan air flow, protruding to the area outside delimited by the wall 31 where the turbofan accessories, not shown in the figure, are located. The combustion chamber 26, according to a known technique, has holes and openings that allow the air to be appropriately distributed for the combustion process.

The exhaust gases from the combustion chamber 26 are expanded in the high pressure turbine 27, firstly in a nozzle and then in the moving blades according to a known technique. The two high pressure axial turbine stages have their respective discs mechanically connected, for example by Hirth couplings, to the shaft 39 so as to drive the compressor which operates at the same rotational speed of the turbine, for example 100000 rotations per minute. The hot gas flow downstream of the axial turbine is directed perpendicular to the rotation axis to further expand in the low pressure turbine formed by counter-rotating radial centrifugal turbine stages 12 and 13.

The first nozzle of the low pressure radial turbine, which also houses the drain and vent channels of the bearing 16, is supported by the diaphragm 40 which also support the stators of the high pressure turbine. The exhaust gases are expanded in the counter-rotating centrifugal radial turbine, i.e. with stages that rotate in opposite directions with the rotation speed of the second stage turbine generally different from the first stage to limit the onset of sonic phenomena on the fan and to allow for changes in engine load.

The two counter-rotating stages can have mirrored blade profiles or in general with leading and trailing edges, eventually different in shape, mirrored according to a known technique. Downstream of the turbine stages there is a transition element 14 that distributes the flow from an annular surface to openings positioned in correspondence with the blades 15. The structure of this component is also visible in Fig.3. The flow of hot combustion gases at 500-600°C passes, releasing heat, through both the exchangers-regenerators 17 that are inside the blades 15 as well as inside the surface of the blades 15. The heat released to the flow of compressed air coming from the impeller 23 reduces the consumption of fuel to be injected into the combustion chamber. The same blades 15, heated by the hot gases circulating inside them, form heat exchangers themselves which, by transferring heat to the cold flow coming from the fan, raise its temperature, or enthalpy content, and therefore its capacity to produce useful thrust. To maximize the exchanged heat flow, the surfaces of the blades 15 are equipped with fins and turbulators to maximize the convective heat exchange coefficient. For example, the heat of the exhaust gases can be recuperated, directly from the regenerators 17, in quantities of 10-30% of the total to the compressed air flow and in 2-3%, from the surfaces of the blades 15, to the cold flow of the fan, allowing energy recovery with obvious advantages in terms of thermodynamic efficiency.

The flow of the combustion gases, having passed through the vanes 15, can be discharged upstream of the nozzle 29, or downstream in some embodiments, from the exhaust section 28 of the blades 15. The exit section is designed to have similar speed both in section 28 and in section 29, in order to minimize mixing losses with obvious advantages in terms of efficiency.

In the exhaust area of the engine is present an "Auxiliary Gear Box" with an electric generator 32 driven by an epicyclic reduction gear 42 which is mechanically driven via a coupling, not visible in the figure, to the impeller 23 of the gas generator. The epicyclic gearbox allows to couple a "fast" gas generator, for example running at 100000 RPM, to a 20000 RPM electric generator, that is suitable for an electric generator with a relatively high power, for instance about 15% of the power of the gas generator, useful for applications such as unmanned aircraft where the on-board electronic devices have a relatively high electrical consumption.

The advantages of the present invention are based on a turbofan architecture that allows the exhaust gases of the gas generator to be used to energize both the fan air flow before they are expelled to generate thrust, and to heat the compressor air flow before entering the combustion chamber.

In addition to the obvious advantages due to the energy recovery from the exhaust gases, an engine architecture using a counter-rotating centrifugal radial turbine allows a simple and compact design of a high by-pass ratio turbofan with the possibility of optimizing the fan performance using variable geometry stator vanes and a regenerative and intercooled gas generator, thus improving both the propulsive efficiency and the thermodynamic efficiency of the engine. The simple architecture is characterized by a limited number of components, which is particularly advantageous for small power engines that are not suited to complex configurations such as those used on modern high by-pass ratio turbofan engines of large power.

## Claims

1. Turbofan with a propulsor including:
- a first impeller 1 rigidly connected to a shaft 2 driven by a multistage centrifugal radial turbine 10.
- a second impeller 8 rigidly connected to a shaft 6, coaxial to the shaft 2, driven by a multi-stage centrifugal radial turbine 11 which rotates in the opposite direction to the turbine 10

2. Turbofan according to the claim 1 with a plurality of stator blades 7 placed between the two impellers and fluidly connected to both.

3. Turbofan according to claim 2 where the stator blades 7, having structural function, are of the variable geometry type with an actuation and control system that adjust the angular position of the trailing edge of the blade by means of an actuator 34 depending on the engine and aircraft operating parameters.

4. Turbofan according to claim 2 or 3 where:
- the turbines 10 and 11 are fluidly connected, but not mechanically, to a "reverse flow" type gas generator which mounts a plurality of centrifugal compression stages, having the last overhung impeller 23 mounted antipodal to the exhaust of the turbine 13 and with the inlet positioned opposite to the direction of propulsor thrust .
- the delivery of the last impeller of the compressor 23 is fluidly connected to a plurality of heat exchangers 17, inside the vanes 15, which extend for a length of no less than 70% of the span between the last impeller 23 of the compressor and the exhaust of the turbine 13 which is also fluidly connected to the exchangers 17.
- the vanes 15, in contact with the propulsor cold flow, are fluidly connected to the delivery of the last rotor of the compressor 23 and to the turbine exhaust 13, and have on the internal and external surface of the profile means to maximize the heat exchange such as fins and turbulators.

5. . Turbofan according to declaration 4 where:
heat exchangers 22, that are installed without protrusions within an area delimited by the lower surface 30 of the propulsor cold flow fan channel 38, and fluidly connected to it via low profile dynamic intake ducts, are also fluidly connected to the delivery of the last compressor impeller 21 mounted between the bearings and to the intake of the first overhung impeller of the compressor.
